# EUROPÄISCHE PATENTANMELDUNG

(11) **EP 2 011 930 A2**
(43) Veröffentlichungstag der Anmeldung: **07.01.2009**
(21) Anmeldenummer: 08103996.8
(22) Anmeldetag: 16.05.2008
(51) Int. Cl.: E03D 5/10, G06F 13/00, H04L 25/00

(54) **Spülvorrichtung mit Bussystem**

(30) Priorität: 03.07.2007 DE 202007009349 U
(71) Anmelder: VIEGA GmbH & Co. KG, 57439 Attendorn (DE)
(72) Erfinder: Kuhbier, Ulrich, 58849 Herscheid (DE)
(74) Vertreter: Cohausz & Florack

(57) **Zusammenfassung**

Die vorliegende Erfindung betrifft eine Spülvorrichtung für ein WC oder Urinal mit einer Steuerelektronik, wobei die Steuerelektronik eine Schnittstelle aufweist, die mit einer Datenverarbeitungseinrichtung eines Bussystems für die Gebäudesystemtechnik verbindbar ist. Zur Ermöglichung einer einfachen Kontrolle hinsichtlich des einwandfreien Funktionierens der Spülvorrichtung wird vorgeschlagen, dass die Schnittstelle so ausgebildet ist, dass darüber verschiedene Betriebszustände einzelner mit der Steuerelektronik verbundener Bauteile der Spülvorrichtung zur Datenverarbeitungseinrichtung übertragen und dort erfasst und gespeichert werden können.

## Beschreibung

Die vorliegende Erfindung betrifft eine Spülvorrichtung für ein WC oder Urinal mit einer Steuerelektronik, wobei die Steuerelektronik eine Schnittstelle aufweist, die mit einer Datenverarbeitungseinrichtung eines Bussystems für die Gebäudesystemtechnik verbindbar ist

Schließlich betrifft die Erfindung ein entsprechendes Bussystem für die Gebäudesystemtechnik.

Üblicherweise wird bei einem WC oder Urinal der Spülvorgang durch manuelle Betätigung einer Spülvorrichtung, beispielsweise durch Drücken eines Tasters, ausgelöst.

In jüngster zeit werden in zunehmendem Maße auch Spülvorrichtungen eingesetzt, welche berührungslos betätigbar sind. Eine berührungslose Auslösung des Spülvorgangs hat einerseits den Vorteil eines zusätzlichen Komforts für den Benutzer, andererseits auch den Vorteil einer verbesserten Hygiene. Bei solchen Spülvorrichtungen wird der Nutzer von Sensoren erfasst, wobei beim Verlassen des Erfassungsbereichs der Sensoren automatisch der Spülvorgang ausgelöst wird.

Aus dem Stand der Technik sind ferner sogenannte Bussysteme für die Gebäudesystemtechnik bekannt. In der Gebäudeinstallation wird heutzutage überwiegend noch konventionell verdrahtet. Die einzelnen Verbraucher und Geräte eines Gebäudes sind deshalb völlig eigenständig und lediglich getrennt voneinander ansteuerbar. Die zunehmend höheren Anforderungen der Gebäudenutzer an Komfort, Sicherheit, Flexibilität und an eine effiziente Energienutzung führen in jüngster Zeit zu einer Verbreitung und Weiterentwicklung von Systemen, die die einzelnen Verbraucher und Geräte eines Gebäudes miteinander zu einem leistungsfähigen Computernetzwerk vernetzen. Typischerweise werden Bussysteme zur automatischen Licht-, Rollladen-, Steckdosen- oder Alarmanlagen-Steuerung, und zwar für Überwachungsaufgaben, für zeit- oder gruppenweise Abläufe sowie zur Fernsteuerung bestimmter Funktionen eingesetzt.

Problematisch beim Stand der Technik der Spülvorrichtungen ist, dass bei der Benutzung nicht auf den ersten Blick erkennbar ist, ob die Spülvorrichtung einwandfrei funktioniert. So ist es gerade bei berührungslos funktionierenden Spülvorrichtungen denkbar, dass der Spülvorgang zeitversetzt erfolgt, das heißt erst nach einer gewissen Zeit nach Verlassen des WCs oder Urinals, so dass der Benutzer keine Kontrolle darüber hat, ob in ausreichendem Maße gespült wird bzw. ob ggf. ein Defekt vorliegt und überhaupt nicht gespült wird.

Es ist daher die Aufgabe der vorliegenden Erfindung, eine Spülvorrichtung für ein WC oder Urinal derart weiterzubilden, dass dem Benutzer eine einfache Kontrolle hinsichtlich des einwandfreien Funktionierens ermöglicht wird.

Die zuvor hergeleitete und aufgezeigte Aufgabe wird bei einer Spülvorrichtung der eingangs genannten Art dadurch gelöst, dass die Schnittstelle so ausgebildet ist, dass darüber verschiedene Betriebszustände einzelner mit der Steuerelektronik verbundener Bauteile der Spülvorrichtung zur Datenverarbeitungseinrichtung übertragen und dort erfasst und gespeichert werden können.

Die Spülvorrichtung ist vorzugsweise für eine berührungslose Betätigung ausgelegt und weist insbesondere eine elektrische Sensoreinheit, die mit der Steuerelektronik elektrisch verbunden ist, und ein elektrisch ansteuerbares Ventil auf, das ebenfalls mit der Steuerelektronik elektrisch verbunden ist und das mit einem Spülkasten über eine Fluidverbindung verbindbar ist.

Durch die Verbindung mit der Gebäudesystemtechnik und die besondere Ausbildung der Schnittstelle hinsichtlich der Übertragung von die verschiedenen Betriebszustände der einzelnen Bauteile betreffenden Daten besteht erfindungsgemäß erstmalig die Möglichkeit der Systemüberwachung, das heißt des sogenannten "monitorings". Über besagte Schnittstelle können verschiedene Betriebszustände der einzelnen, die Spülvorrichtung bildenden Bauteile erfasst, überwacht, dokumentiert und gespeichert werden. So hat der Benutzer jederzeit die Gewissheit, dass die Spülvorrichtung einwandfrei funktioniert und dass ungewöhnliche Vorkommnisse, insbesondere Defekte, zuverlässig erfasst werden und jederzeit abrufbar sind.

Mit einer Spülvorrichtung der erfindungsgemäßen Art ist auch erstmalig die Realisierung einer Statistikfunktion möglich. So kann die Art und Häufigkeit der Benutzung hilfreich sein, um den Wasserverbrauch und/oder Energieverbrauch zu dokumentieren. Auch können Wartungsintervalle generiert bzw. deren Ablauf angezeigt werden.

Für das Monitoring und/oder die Statistikfunktion ist es besonders wichtig, Daten über das elektrisch ansteuerbare Ventil zu erhalten und elektronisch zu verarbeiten, da die Betriebszustände des Ventils unter anderem Auskunft geben über die Art und Häufigkeit der Benutzung, den Wasserverbrauch und/oder den Energieverbrauch der Spülvorrichtung. Zu diesem Zweck ist gemäß einer Ausgestaltung der erfindungsgemäßen Spülvorrichtung die Schnittstelle so ausgebildet, dass darüber verschiedene Betriebszustände des elektrisch ansteuerbaren Ventils, das mit einem Spülkasten über eine Fluidverbindung verbindbar ist, zur Datenverarbeitungseinrichtung übertragen und dort erfasst und gespeichert werden können. Insbesondere sollen die Betriebszustände "Ventil offen" und/oder "Ventil geschlossen" übertragen, erfasst und gespeichert werden können. Vorzugsweise wird als Betriebszustand die Öffnungsdauer und/oder die Öffnungsweite des Ventils übertragen, erfasst und gespeichert.

Gemäß einer weiteren Ausgestaltung der erfindungsgemäßen Spülvorrichtung ist die Steuerelektronik für eine bidirektionale Verbindung mit der Datenverarbeitungseinrichtung ausgelegt. Auf diese Weise können von der Datenverarbeitungseinrichtung nicht nur Signale bzw. Daten der Spülvorrichtung empfangen werden, sondern auch zur Spülvorrichtung übertragen werden. Dadurch kann die Datenverarbeitungseinrichtung durch Übertragen bestimmter Anforderungssignale an die Spülvorrichtung verschiedene Betriebszustände abrufen und/oder Funktionen auslösen, beispielsweise die Betätigung des Ventils.

Letzteres hat insbesondere den Vorteil, dass automatisch zu bestimmten Zeiten eine Spülung zu Reinigungszwecken ausgelöst wird, was insbesondere bei großen Gebäuden wie Bürogebäuden, Krankenhäusern oder dergleichen unter hygienischen Gesichtspunkten sinnvoll ist.

Es ist sogar denkbar, dass die Datenverarbeitungseinrichtung die Sensoreinheit ansteuert und Informationen darüber erhält, ob das Licht beispielsweise eines Badezimmers an- oder ausgeschaltet ist.

Gemäß noch einer weiteren Ausgestaltung der erfindungsgemäßen Spülvorrichtung ist die Steuerelektronik für eine aktive Verbindung mit der Datenverarbeitungseinrichtung ausgelegt. Mit anderen Worten, die Datenverarbeitungseinrichtung kann selbständig ohne Einwirkung eines Nutzers über besagte Schnittstelle die Systemüberwachung und Statistikfunktion sowie ggf. die Betätigung einzelner Komponenten der Spülvorrichtung ausführen.

Erfindungsgemäß kann die Spülvorrichtung sowohl auf klassische Weise, also manuell über einen Taster oder dergleichen, oder aber berührungslos mittels einer geeigneten Sensorik, wie sie zuvor bereits beschrieben wurde, betätigt werden. Die berührungslose Spülvorrichtung mit der elektrischen Sensoreinheit, der Steuerelektronik und dem elektrisch ansteuerbaren Ventil weist insbesondere eine Strahlungsquelle zur Erzeugung von Strahlung einer ersten Wellenlänge auf, wobei die Sensoreinheit einen ersten Strahlungsdetektor zur Detektion von Strahlung der ersten Wellenlänge sowie einen zweiten Strahlungsdetektor zur Detektion von Strahlung einer zweiten Wellenlänge aufweist. Neben einem besonderen Komfort bei der berührungslosen Betätigung der Spülung hat dies den Vorteil, dass die Datenverarbeitungseinrichtung über die Schnittstelle auf einfache Weise wesentliche Betriebszustände erfassen und wesentliche Funktionen, wie sie bereits zuvor beschrieben wurden, auslösen kann. Insbesondere sei hier die Überwachung und auch die Fernsteuerung des elektrisch ansteuerbaren Ventils erwähnt.

Wie bereits angedeutet, ist gemäß einer Ausgestaltung der erfindungsgemäßen Spülvorrichtung die Steuerelektronik derart ausgebildet, dass sie elektrische Signale über die Schnittstelle zur Datenverarbeitungseinrichtung übertragen kann, wenn die Sensoreinheit, das Ventil und/oder die Strahlungsquelle eine Betätigung durchführt. Vorzugsweise charakterisieren die Signale die Art, die Zeit, den Ort und/oder die Dauer der Betätigung. Mit einer Betätigung ist beispielsweise das Anschalten oder Ausschalten der Strahlungsquelle, ein Detektionsvorgang des Strahlungsdetektors oder ein Öffnen oder Schließen des Ventils gemeint.

Gemäß einer weiteren Ausgestaltung der erfindungsgemäßen Spülvorrichtung ist die Schnittstelle für eine drahtgebundene Übertragung von Signalen ausgelegt. Alternativ oder zusätzlich kann die Schnittstelle auch für eine drahtlose Übertragung von Signalen ausgelegt sein. In letzterem Fall ist insbesondere eine Funkübertragung und/oder eine Infrarotübertragung von Signalen denkbar. Eine drahtlose Übertragung hat den Vorteil, dass die erfindungsgemäße Spülvorrichtung auf einfache Weise, auch nachträglich, installiert werden kann.

Gemäß wiederum einer weiteren Ausgestaltung der erfindungsgemäßen Spülvorrichtung ist diese als bauliche Einheit ausgebildet. Als bauliche Einheit kann die Spülvorrichtung besonders schnell und einfach installiert werden. Auch nimmt eine bauliche Einheit, da die Abmessungen werkseitig optimiert worden sind, relativ wenig Raum ein.

Zumindest ein Teil der die Spülvorrichtung bildenden Bauteile, insbesondere die Steuerelektronik, vorzugsweise zusammen mit der Schnittstelle, kann in einem Tragrahmen vergossen sein.

Auch kann zumindest ein Teil der die Spülvorrichtung bildenden Bauteile, insbesondere die Sensoreinheit, die Strahlungsquelle(n) und/oder die Steuerelektronik, vorzugsweise zusammen mit der Schnittstelle, auf einer kombinierten Leiterplatte angeordnet sein.

Die zuvor hergeleitete und aufgezeigte Aufgabe wird ferner gelöst durch ein WC oder Urinal mit einer Spülvorrichtung, wie sie zuvor beschrieben wurde.

Schließlich wird die zuvor hergeleitete und aufgezeigte Aufgabe auch gelöst durch ein Bussystem für die Gebäudesystemtechnik mit einer Datenverarbeitungseinrichtung, mit einer Spülvorrichtung, wie sie zuvor beschrieben wurde, und mit einer Verbindung zwischen der Datenverarbeitungseinrichtung und der Spülvorrichtung, wobei diese Verbindung vorzugsweise bidirektional ist.

Die Vorteile wurden bereits zuvor ausführlich diskutiert. Besonders bevorzugte Ausgestaltungen sind im Folgenden angegeben.

Gemäß einer Ausgestaltung des erfindungsgemäßen Bussystems ist die Verbindung drahtgebunden. Auch kann die Verbindung drahtlos sein, insbesondere in Form einer Funkverbindung und/oder einer Infrarotverbindung.

Gemäß noch einer weiteren Ausgestaltung des Bussystems weist die Datenverarbeitungseinrichtung einen Datenspeicher, ein Anzeigemittel, ein Ausgabemittel und/oder ein Eingabemittel auf. Auf diese Weise kann der Benutzer jederzeit den Status der Systemüberwachung oder die Statistikfunktion abrufen. Anzeigemittel können dabei ein Monitor, Dioden, und/oder Lautsprecher sein. Als Ausgabemittel kann ein Drucker verwendet werden. Eingaben können über Tastatur, Maus oder dergleichen erfolgen.

Ferner ist gemäß noch einer anderen Ausgestaltung des erfindungsgemäßen Bussystems die Datenverarbeitungseinrichtung derart ausgebildet, dass sie elektrische Signale über die Schnittstelle an die Steuerelektronik übertragen kann, die eine Betätigung der Sensoreinheit, des Ventils und/oder der Strahlungsquelle bewirken. Mit einer Betätigung ist beispielsweise das Anschalten oder Ausschalten der Strahlungsquelle, ein Detektionsvorgang des Strahlungsdetektors oder ein Öffnen oder Schließen des Ventils gemeint.

Bei dem erfindungsgemäßen Bussystem kann zur Realisierung der erwähnten Statistikfunktion vorgesehen sein, dass das Bussystem Mittel zur Erstellung einer Statistik aufweist und insbesondere so ausgebildet ist, dass es den Wasser- und/oder Energieverbrauch der Spülvorrichtung anzeigen kann. Auch kann das Bussystem so ausgebildet sein, dass es Wartungsintervalle generieren und anzeigen kann. Schließlich ist denkbar, dass das Bussystem so ausgebildet ist, dass es, unabhängig von der Anwesenheit eines Benutzers an der Spülvorrichtung, eine Spülung der Spülvorrichtung zu Reinigungszwecken durchführen kann.

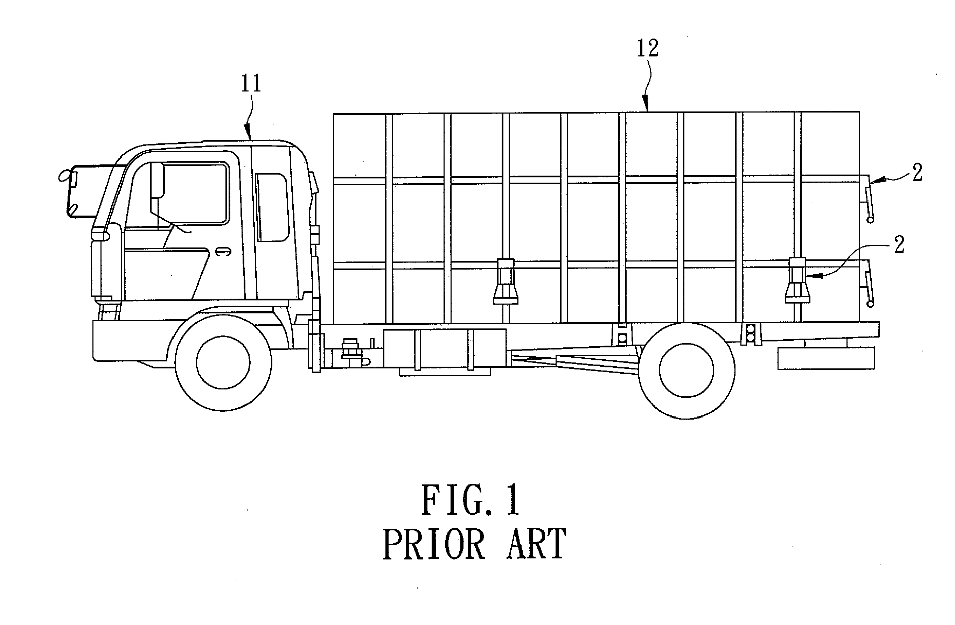

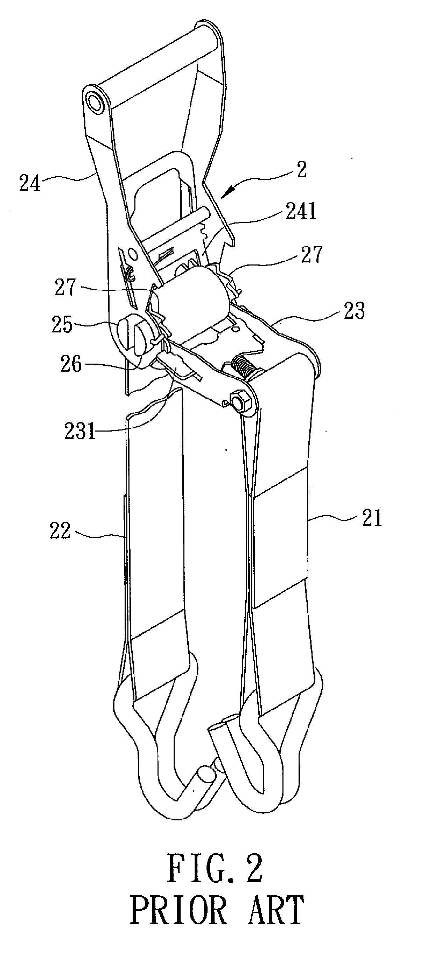

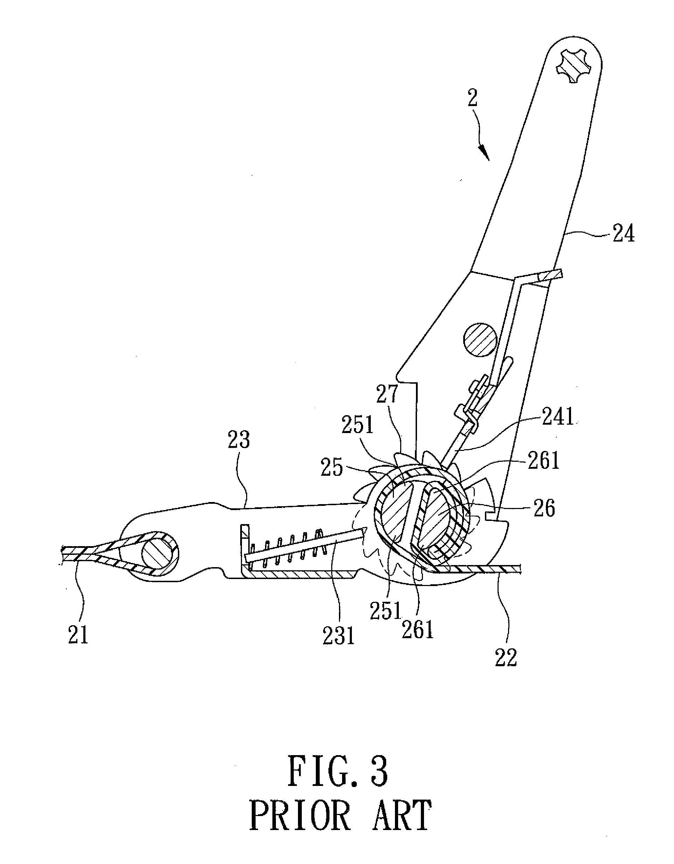

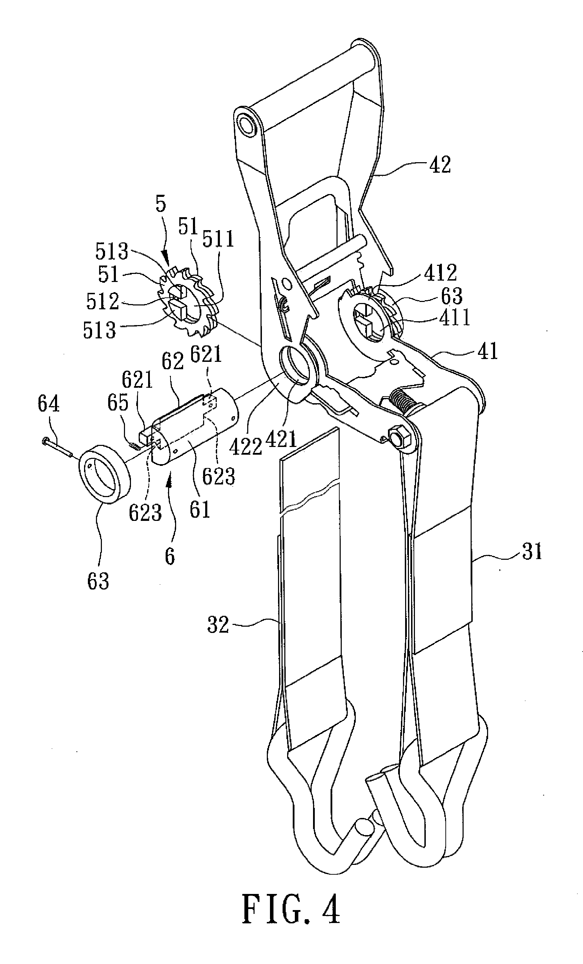

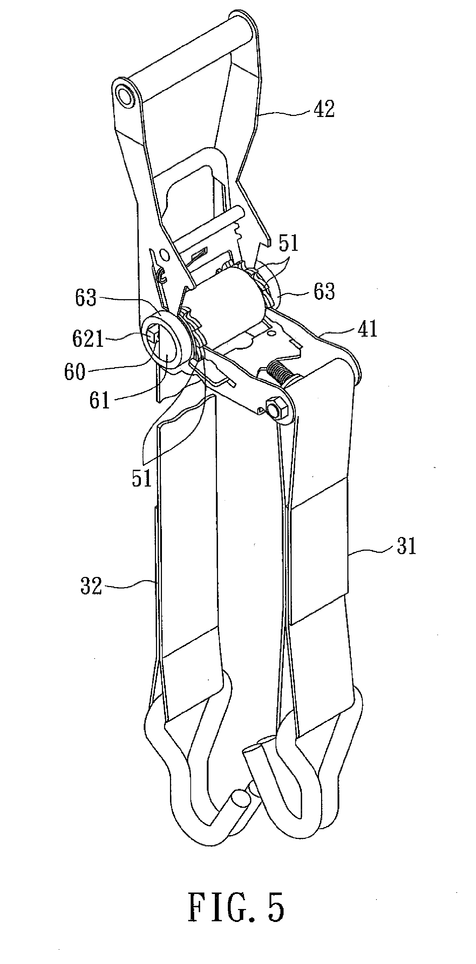

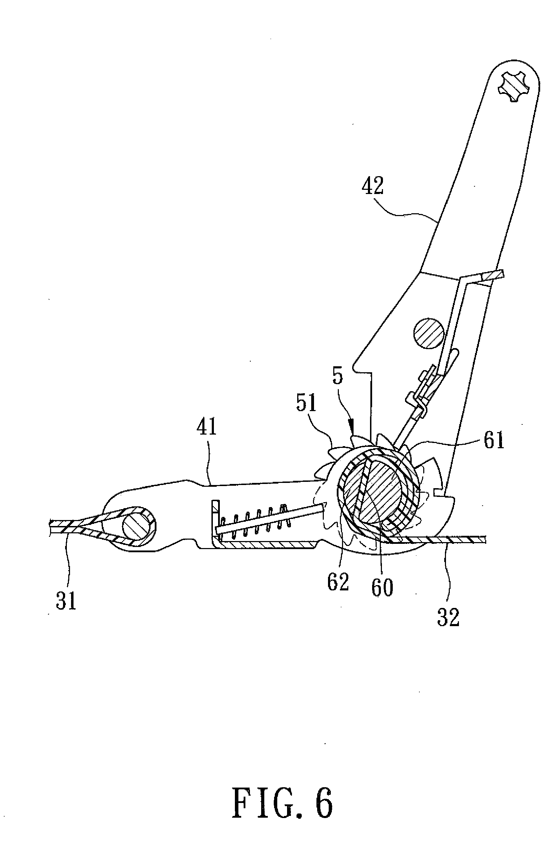

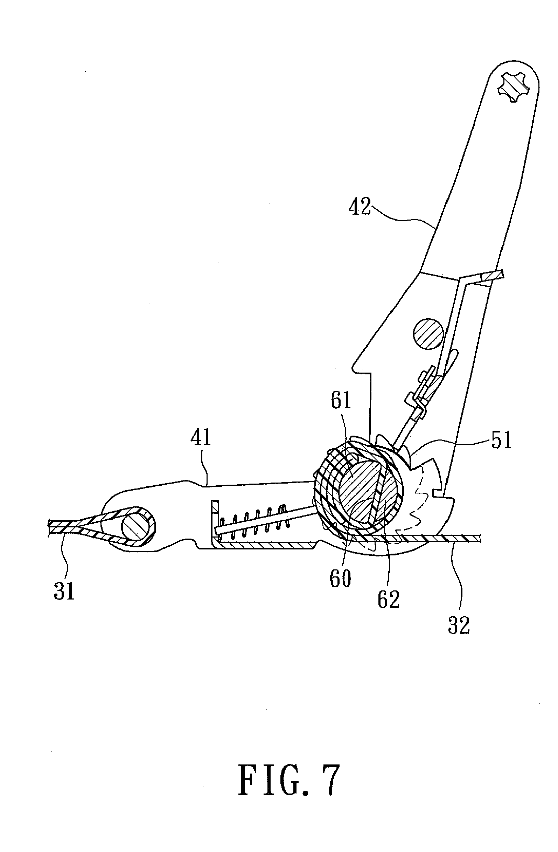

Es gibt nun eine Vielzahl von Möglichkeiten, die erfindungsgemäße Spülvorrichtung und das erfindungsgemäße WC oder Urinal sowie das entsprechende Bussystem auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung.

In der Zeichnung zeigt die einzige Figur den schematischen Aufbau eines Ausführungsbeispiels einer erfindungsgemäßen Spülvorrichtung für ein WC oder Urinal mit einer Schnittstelle zu einer Datenverarbeitungseinrichtung eines Bussystems.

Erfindungsgemäß weist die Spülvorrichtung eine Steuerelektronik 2 auf, welche in der vorliegenden Zeichnung als zentrales Bauteil dargestellt ist. Die Steuerelektronik 2 ist mit einer Sensoreinheit 1 verbunden, welche einen ersten Strahlungsdetektor 5 und einen zweiten Strahlungsdetektor 6 aufweist. Ferner weist die Steuerelektronik 2 eine Schnittstelle 12 auf, die mit einer Datenverarbeitungseinrichtung 13 eines Bussystems für die Gebäudesystemtechnik über eine drahtgebundene Verbindung 14 verbunden ist.

Bevor auf die Schnittstelle 12 der Steuerelektronik 2 eingegangen wird, werden im folgenden kurz die wesentlichen Funktionen der übrigen Bauteile bei einem Spülvorgang beschrieben.

Der erste Strahlungsdetektor 5 dient zur Detektion von Strahlung einer ersten Wellenlänge, welche von einer Strahlungsquelle 4, die ebenfalls mit der Steuerelektronik 2 verbunden ist, erzeugt wurde und anschließend von einem Benutzer des WCs oder Urinals reflektiert wurde.

Der zweite Strahlungsdetektor 6 dient zur Detektion von Strahlung einer zweiten Wellenlänge, die beispielsweise von Fremdlicht herrührt.

### Auf diese Weise kann die Steuerelektronik 2

Reflektionsstrahlung, die auf die Anwesenheit eines Nutzers hindeutet, und Fremdlichtstrahlung unterscheiden und zur Steuerung eines elektrisch ansteuerbaren Ventils 3 verwenden. Dadurch kann evtl. einfallende Fremdlichtstrahlung ausgeglichen werden, wodurch Störungen des Spülvorgangs, beispielsweise Fehlspülungen, vermieden werden.

Ferner können die Strahlungsdetektoren auch dazu verwendet werden, zu überprüfen, ob das Licht beispielsweise im Badezimmer angeschaltet oder ausgeschaltet ist.

Im vorliegenden Fall handelt es sich bei der Strahlungsquelle 4 um eine Leuchtdiode, welche Strahlung im Infrarotbereich erzeugen kann. Auch die beiden Strahlungsdetektoren 5 und 6, bei denen es sich um Fotodioden handelt, können Strahlung im Infrarotbereich detektieren.

Im dargestellten Ausführungsbeispiel dient einerseits eine Batterie 9 und andererseits ein Netzteil 10 zur Spannungsversorgung. Im Normalfall wird die Funktion der erfindungsgemäßen Spülvorrichtung über das Netzteil 10 gewährleistet, im Falle eines Stromausfalls oder einer Störung des Netzteils dagegen von der Batterie 9. Auf diese Weise ist dauerhaft eine komfortable und berührungslose Auslösung des Spülvorgangs möglich. Eine weitere als Leuchtdiode ausgebildete Strahlungsquelle 11 zeigt dabei dem Nutzer dauerhaft den Ladezustand der Batterie 9 an. Ist die Strahlungsquelle 11 erloschen, so zeigt dies dem Nutzer an, dass eine neue Batterie eingesetzt werden sollte. Selbstverständlich ist es auch denkbar, statt der Batterie 9 einen Akku vorzusehen, der vorzugsweise automatisch über das Netzteil 10 geladen wird.

### Bei dem in der einzigen Figur dargestellten

Ausführungsbeispiel sendet die Steuerelektronik 2 dann ein Steuersignal zum Öffnen des Ventils 3, wenn beim Herannahen eines Nutzers der Strahlungsdetektor 5 zunächst eine Erhöhung der Intensität an Strahlung der ersten Wellenlänge, also an Reflektionsstrahlung, detektiert hat und anschließend, indem der Nutzer das WC oder Urinal verläßt, der erste Strahlungsdetektor eine Verringerung der Intensität an Reflektionsstrahlung detektiert hat. Auf diese Weise erkennt die Steuerelektronik 2, dass zunächst eine Benutzung des WCs und Urinals aufgenommen wird und diese anschließend beendet wird. Nach einer gewissen Zeitverzögerung öffnet dann das Ventil 3 und löst damit automatisch den Spülvorgang aus.

Die Spüldauer und Spülwassermenge wird dabei über ein Mittel 7 zum Einstellen der Öffnungsdauer und der Öffnungsweite des Ventils 3 in Form eines Einstellpotentiometers individuell gewählt.

Außerdem weist die Spülvorrichtung gemäß dem in der einzigen Figur dargestellten Ausführungsbeispiel noch ein Mittel 8 zum Einstellen der Reichweite und/oder Sendeleistung der Strahlungsquelle 4 auf, ebenfalls in Form eines Einstellpotentiometers. Auf diese Weise kann die Steuerung individuell an die Bedürfnisse des Nutzers angepasst werden.

Schließlich ist bei dem dargestellten Ausführungsbeispiel eine Schnittstelle 12 mit einer drahtgebundenen Verbindung 14 zu einer Datenverarbeitungseinrichtung 13 eines Bussystems dargestellt. Bei der Verbindung 14 handelt es sich um eine bidirektionale Verbindung zwischen Steuerelektronik 2 und Datenverarbeitungseinrichtung 13.

Auf diese Weise besteht die Möglichkeit der Systemüberwachung, wobei über die Schnittstelle 12 verschiedene Betriebszustände der einzelnen, die Spülvorrichtung bildenden Bauteile erfasst, überwacht, dokumentiert und gespeichert werden können. So hat der Benutzer jederzeit die Gewissheit, dass die Spülvorrichtung, insbesondere das Ventil 3, zuverlässig funktioniert bzw. rechtzeitig Defekte angezeigt werden.

Im vorliegenden Fall ist die Steuerelektronik 2 derart ausgebildet, dass sie elektrische Signale, die die Art, die Zeit, den Ort und die Dauer einer Betätigung von Sensoreineinheit 1, Ventil 3 und Strahlungsquelle 4 charakterisieren, zur Datenverarbeitungseinrichtung 13 übertragen kann.

Entsprechend ist auch die Datenverarbeitungseinrichtung 13 dafür vorgesehen, elektrische Signale über die Schnittstelle 12 an die Steuerelektronik 2 zu übertragen, die eine Betätigung der Sensoreinheit 2, des Ventils 3 und der Strahlungsquelle 4 bewirken können. Auf diese Weise kann die Datenverarbeitungseinrichtung 13 im Bedarfsfall die Sensorik zur Überprüfung des Raumlichts oder das Ventil zur Durchführung eines automatischen Spülvorgangs ansteuern.

## Patentansprüche

**1.** Spülvorrichtung für ein WC oder Urinal mit einer Steuerelektronik (2), wobei die Steuerelektronik (2) eine Schnittstelle (12) aufweist, die mit einer Datenverarbeitungseinrichtung (13) eines Bussystems für die Gebäudesystemtechnik verbindbar ist, **dadurch gekennzeichnet, dass** die Schnittstelle (12) so ausgebildet ist, dass darüber verschiedene Betriebszustände einzelner mit der Steuerelektronik (2) verbundener Bauteile der Spülvorrichtung zur Datenverarbeitungseinrichtung (13) übertragen und dort erfasst und gespeichert werden können.

**2.** Spülvorrichtung nach Anspruch 1, **dadurch gekennzeichnet, dass** die Schnittstelle (12) so ausgebildet ist, dass darüber verschiedene Betriebszustände eines elektrisch ansteuerbaren Ventils (3), das mit einem Spülkasten über eine Fluidverbindung verbindbar ist, insbesondere die Betriebszustände "Ventil offen" und/oder "Ventil geschlossen" und vorzugsweise als Betriebszustand die Öffnungsdauer und/oder Öffnungsweite des Ventils (3) zur Datenverarbeitungseinrichtung (13) übertragen und dort erfasst und gespeichert werden können.

**4.** Spülvorrichtung nach Anspruch 2 oder 3, **dadurch gekennzeichnet, dass**

**3.** Spülvorrichtung nach einem der vorangehenden Ansprüche, **dadurch gekennzeichnet, dass** die Steuerelektronik (2) für eine bidirektionale Verbindung und insbesondere für eine aktive Verbindung mit der Datenverarbeitungseinrichtung (13) ausgelegt ist.

**4.** Spülvorrichtung nach einem der vorangehenden Ansprüche, **dadurch gekennzeichnet, dass** sie mit einer elektrischen Sensoreinheit (1), die mit der Steuerelektronik (2) verbunden ist, verbindbar ist, wobei insbesondere eine Strahlungsquelle (4) zur Erzeugung von Strahlung einer ersten Wellenlänge vorgesehen ist und die Sensoreinheit (1) einen ersten Strahlungsdetektor (5) zur Detektion von Strahlung der ersten Wellenlänge sowie einen zweiten Strahlungsdetektor (6) zur Detektion von Strahlung einer zweiten Wellenlänge aufweist.

**5.** Spülvorrichtung nach Anspruch 4, **dadurch gekennzeichnet, dass** die Steuerelektronik (2) derart ausgebildet ist, dass sie elektrische Signale über die Schnittstelle (12) zur Datenverarbeitungseinrichtung (13) übertragen kann, wenn die Sensoreinheit (1), das Ventil (3) und/oder die Strahlungsquelle (4) eine Betätigung durchführt, wobei insbesondere die Signale die Art, die Zeit, den Ort und/oder die Dauer der Betätigung charakterisieren.

**6.** Spülvorrichtung nach einem der vorangehenden Ansprüche, **dadurch gekennzeichnet, dass** die Schnittstelle (12) für eine drahtgebundene Übertragung von Signalen oder eine drahtlose Übertragung von Signalen, insbesondere eine Funkübertragung und/oder eine Infrarotübertragung von Signalen ausgelegt ist.

**7.** Spülvorrichtung nach einem der vorangehenden Ansprüche, **dadurch gekennzeichnet, dass** sie als bauliche Einheit ausgebildet ist, wobei vorzugsweise zumindest ein Teil der die Spülvorrichtung bildenden Bauteile, insbesondere die Steuerelektronik (2), vorzugsweise zusammen mit der Schnittstelle (12), in einem Tragrahmen vergossen ist.

**8.** Spülvorrichtung nach Anspruch 7, **dadurch gekennzeichnet, dass** zumindest ein Teil der die Spülvorrichtung bildenden Bauteile, insbesondere die Sensoreinheit (1), die Strahlungsquelle(n) (4,11) und/oder die Steuerelektronik (2), vorzugsweise zusammen mit der Schnittstelle (12), auf einer kombinierten Leiterplatte angeordnet ist.

**9.** WC oder Urinal mit einer Spülvorrichtung nach einem der vorangehenden Ansprüche.

**10.** Bussystem für die Gebäudesystemtechnik
- mit einer Datenverarbeitungseinrichtung (13),
- mit einer Spülvorrichtung nach einem der Ansprüche 1 bis 9, und
- mit einer Verbindung (14) zwischen der Datenverarbeitungseinrichtung (13) und der Spülvorrichtung.

**11.** Bussystem nach Anspruch 10, **dadurch gekennzeichnet, dass** die Verbindung (14) drahtgebunden oder drahtlos, insbesondere eine Funkverbindung und/oder eine Infrarotverbindung ist.

**12.** Bussystem nach Anspruch 10 oder 11, **dadurch gekennzeichnet, dass** die Verbindung (14) eine bidirektionale Verbindung ist.

**13.** Bussystem nach einem der Ansprüche 10 bis 12, **dadurch gekennzeichnet, dass** die Datenverarbeitungseinrichtung (13) derart ausgebildet ist, dass sie elektrische Signale über die Schnittstelle (12) an die Steuerelektronik (2) übertragen kann, die eine Betätigung der Sensoreinheit (2), des Ventils (3) und/oder der Strahlungsquelle (4) bewirken.

**14.** Bussystem nach einem der Ansprüche 10 bis 13, **dadurch gekennzeichnet, dass** das Bussystem Mittel zur Erstellung einer Statistik aufweist und insbesondere so ausgebildet ist, dass es den Wasser- und/oder Energieverbrauch der Spülvorrichtung anzeigen kann.

**15.** Bussystem nach einem der Ansprüche 10 bis 14, **dadurch gekennzeichnet, dass** das Bussystem so ausgebildet ist, dass es Wartungsintervalle generieren und anzeigen kann und/oder, unabhängig von der Anwesenheit eines Benutzers an der Spülvorrichtung, eine Spülung der Spülvorrichtung zu Reinigungszwecken durchführen kann.
